# EUROPEAN PATENT SPECIFICATION

(11) **EP 0 916 622 B1**
(45) Date of publication and mention of the grant of the patent: **17.07.2002**
(21) Application number: 98121007.3
(22) Date of filing: 05.11.1998
(51) Int. Cl.: C02F 9/00

(54) **Process for preventing scale formation in a paper-making process**
Verfahren zur Kesselsteinbekaempfung in Verfahren zur Herstellung von Papier
Procédé pour empêcher la formation de tartre dans les procédés de fabrication du papier

(30) Priority: 05.11.1997 JP 30279597
(43) Date of publication of application: 19.05.1999
(73) Proprietor: KURITA WATER INDUSTRIES LTD., Shinjuku-ku, Tokyo 160-0023 (JP)
(72) Inventor: Sato Shigeru, c/o Kurita Water Industries Ltd., Shinjuku-ku, Tokyo 160-0023 (JP); Sakaguchi, Aya, Kurita Water Industries Ltd., Shinjuku-ku, Tokyo 160-0023 (JP)
(74) Representative: Goddar, Heinz J., Dr.

(56) References cited:
- PATENT ABSTRACTS OF JAPAN vol. 9, no. 233 (C-304), 19 September 1985 & JP 60 090092 A (KURITA KK)

## Description

### BACKGROUND OF THE INVENTION

### 1. Field of the Invention

The present invention relates to a process for preventing scale formation in a paper-making process. More particularly, the present invention relates to a chemical program for preventing scale formation in a paper-making process which can effectively prevent scale formation in a stuff and stock preparation part or in a wire part of a paper machine.

### 2. Description of the Related Arts

Pulp used as the raw material of paper contains usually calcium salts and barium salts, and calcium ion and barium ion are eluted into process water or white water. Particularly, when waste paper for raw material is used, a large amount of calcium ion is eluted into process water or white water because waste paper contains a large amount of inorganic fillers. Aluminum sulfate is also widely used in the paper-making process mainly to fix sizing agents and to adjust pH of white water. Moreover, sulfuric acid is occasionally added to adjust pH of white water. Sulfate ion derived from these substances are combined with calcium ion and barium ion derived from waste paper used as the raw material, and the scales such as calcium sulfate and barium sulfate are formed at the surfaces of various instruments in the process. Oxalate ion, derived from wood, is occasionally eluted from pulp into white water. When the oxalate ions are combined with calcium ion, calcium oxalate scale is formed.

These scale substances adhere to the surfaces of various instruments in the paper-making process such as a mixing chest, a machine chest, tanks, head-boxes, pipes, fan pumps, screens and stock-inlets to decrease its performance. Moreover, detached portions of scale from the surface of the walls occasionally cause a heavy damage to the paper and board production with "broke" and inferior quality of paper products by the formation of spots and pin-holes.

Addition of a scale inhibitor has been applied to prevent scale formation of calcium sulfate, barium sulfate and calcium oxalate. Well known scale inhibitors such as salts of polyacrylic acid, phosphonic acid and polyphosphoric acid have been used. However, these scale inhibitors do not exhibit a sufficient effect because the activities of these anionic scale inhibitors are reduced by reaction with large amounts of aluminum ions and cationic substances derived from paper strengthen agents in the white water. When scale formation cannot be sufficiently prevented by the conventional scale inhibitors as described above, accumulated scale have to be removed with a large amount of labor and expense of a large cost. Particularly, barium sulfate has extremely small solubility and shows little change in solubility with pH. Therefore, it is the actual situation that barium sulfate must be peeled away by hands.

Thus, it has been strongly desired that effective programs for preventing scale formation in a paper-making process are developed.

### SUMMARY OF THE INVENTION

Accordingly, the present invention has an object to provide a chemical program for preventing scale formation in a paper-making process which can effectively prevent scale formation in a stuff and stock preparation part and in a wire part of a paper machine.

As the result of extensive studies to solve the above problems, scale formation on the submerged surfaces of the paper machine can be prevented by the addition of crystals as the seeds for crystallization, which have the same or similar form to scale substances formed at the processes, into the process water of the paper-making process. These added crystals promote precipitation of scale-forming components onto the surfaces of them to be crystals holding scale-forming components around them. And the particles described above are removed from the process water to wet web by catch together with furnish. The present invention has been completed on the basis of this knowledge.

Thus, the present invention provides
1. A process for preventing scale formation in a paper-making process which comprises adding crystals as seed for crystallization having an average diameter of 0.05 to 100 µm and having the same chemical composition as that of the scale substance or being a crystal that belongs to the same crystal form as that of the scale substance and shows a difference in the lattice constants of 10% or less from those of the scale substance formed in a paper-making process into process water of stuff and stock preparation parts or wire parts of a paper machine, making precipitate the scale-forming components in the process water onto the crystal surfaces, coming in wet web through the conditions that the particles distribute among furnish in the wire parts of a paper machine, and removing the scale-forming components as the particles of crystals from the system of the paper-making process together with the produced paper.
2. A process according to Claim 1, wherein the scale substance is calcium sulfate and the crystal as seed for crystallization is calcium sulfate.
3. A process according to Claim 1, wherein the scale substance is calcium oxalate and the crystal as seed for crystallization is calcium oxalate.
4. A process according to Claim 1, wherein the crystal as seed for crystallization is added in an amount of 0.1 to 10,000 mg per 1 liter of water used in either parts.
5. A process according to Claim 1, wherein the crystals as seed for crystallization are added as powder or added in the form of slurry prepared by dispersing the crystal in water into the paper-making process.
6. A process according to Claim 1, wherein the crystals as seed for crystallization are added at the stuff and the stock preparation parts of the paper-making process.
7. A process according to Claim 1, wherein the crystals as seed for crystallization are used in combination with other agents which are conventional scale inhibitors, sizing agents, paper strengthen agents, retention aids, drainage aids and/or slime control agents.

### BRIEF DESCRIPTION OF THE DRAWINGS

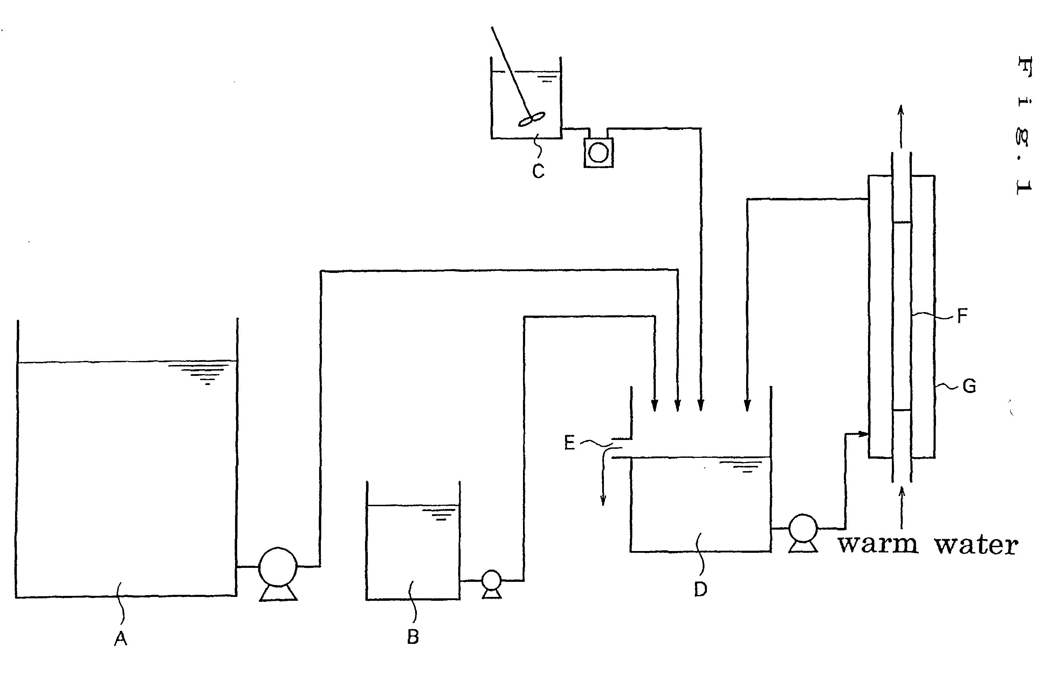

Figure 1 shows a schematic diagram of the test apparatus used in Examples.

Characters in the drawing have the following meanings:
A a tank
B a tank
C a tank
D a tank
E an overflow outlet
F a stainless steel tube
G an acrylic resin column

### DESCRIPTION OF THE PREFERRED EMBODIMENTS

The process for preventing scale formation of the present invention can be applied to prevent scale formation in a paper-making process. In the present invention, a crystal, which has the same or similar form to a scale substance at the paper-making process is added into a process water in the paper-making process. The added crystal promotes precipitation of scale-forming components onto the surfaces of the crystal particles to be the crystal particles holding scale-forming components therearound. These particles are able to remove from the process water to wet web by catch together with furnish.

The scale substance to which the process of the present invention is applied is not particularly limited. In many cases, scales containing calcium sulfate, barium sulfate, calcium oxalate and calcium carbonate as the main components are formed in the paper-making processes. The process of the present invention can be applied advantageously to the above scale substances. The chemical composition and the crystal structure of the scale substances can be determined by taking a sample of the scale substance and analyzing the sample in accordance with the chemical analysis and the X-ray diffraction analysis. Although the scale substance formed in a paper-making process often contains a plurality of types of crystals, in the process of the present invention, it is not necessary that crystals which have the same or similar form to all the types of contained crystals of the scale substance must be added. It is sufficient for achieving the object of the present invention that crystals which have the same or similar form to just one or two major types of contained crystal forms of the scale substance are added.

In the present invention, the crystal which has the same or similar form to the scale substance means a crystal which has the same chemical composition as that of the crystal of the scale substance or, when the crystal has a chemical composition different from that of the crystal of the scale substance, a crystal which belongs to the same crystal form and shows a difference in the lattice constants of 10% or less from those of the scale substance. As the crystal which has the same or similar form to the scale substance, any types of crystal can be used as long as the crystal has a lattice structure or a crystal form which has the same as similar form to that of the crystal of the scale substance and can be effective as the seed crystal. Any type of crystal described above, including crystals which can initiate epitaxial growth of crystals, can be used

For example, when the scale substance formed in the paper-making process is calcium sulfate, a crystal of calcium sulfate which has the same chemical composition as the scale substance can be used as the crystal which has the same or similar form to the scale substance. Examples of the crystal of calcium sulfate include type I crystal of anhydrous calcium sulfate of the cubic system, type II crystal of anhydrous calcium sulfate of the orthorhombic system and a crystal of calcium sulfate dihydrate of the monoclinic system. A crystal of calcium sulfate half-hydrate of the hexagonal system becomes the dihydrate when the crystal is brought into contact with water. This crystal may also be used. When the scale substance formed in the paper-making process is barium sulfate, a crystal of barium sulfate can be used as the crystal which has the same or similar form to the scale substance. When the scale substance formed in the paper-making process is calcium oxalate, a crystal of calcium oxalate can be used as the crystal which has the same or similar form to the scale substance.

When, for example, the scale substance formed in the recovery system of pulp in the paper-making process is calcium sulfate dihydrate of the monoclinic system (a=10.47Å, b=15.15 Å, c=6.51 Å, β=151°33'), a crystal other than the crystal of calcium sulfate can also be used as the crystal similar to the scale substance when the crystal belongs to the monoclinic system and a=9.42 to 11.52 Å, b=13.64 to 16.67 Å, c=5.86 to 7.16 Å and b=136°24' to 166°42'.

The crystal which has the same or similar form to the scale substance used in the present invention has an average diameter of 0.05 to 100 µm and it is more preferable that the crystal has an average diameter of 5 to 50 µm. When the average diameter is excessively small, i.e., less than 0.05 µm, the crystal of the scale substance which is precipitated together with the added seed crystal is excessively small and there is the possibility that incorporating the formed crystal into paper becomes difficult. When the average diameter is excessively large, i.e., more than 100 µm, the crystal of the scale substance which is precipitated together with the added seed crystal is excessively large and there is the possibility that the process of paper making is adversely affected or the quality of the obtained paper products become inferior.

In the process of present invention, the method of addition of the crystal which has the same or similar form to the crystal of the scale substance is not particularly limited. For example, the crystal may be added as powder without any treatment or added in the form of a slurry prepared by dispersing the crystal in water. The method of addition of the slurry containing the crystal is preferable because the operation of the addition is easy and there is no possibility that dust is formed.

In the process of the present invention, the amount of the crystal which has the same or similar form to the scale substance is not particularly limited. The amount is preferably 0.1 to 10,000 mg and is more preferably 1 to 100 mg per 1 liter of water used. When the amount is less than 0.1 mg per 1 liter of water, there is the possibility that a sufficient effect is not exhibited. When the amount exceeds 10,000 mg per 1 liter of water, there is the possibility that stability of the paper quality is adversely affected.

In the process of the present invention, the location of addition of the crystal which has the same or similar form to the scale substance is not particularly limited. The crystal may be added in the stuff and stock preparation parts, the wire parts, the recovery parts of white water, the waste water treatment plants, etc. It is preferable that the crystal is added in the stuff and stock preparation parts, for example, in a mixing chest or in a machine chest, among the above parts of the process, in order to fundamentally eliminate troubles caused by scale in the wire parts.

In the process of the present invention, other agents may be used in combination with the crystal which has the same or similar form to the scale substance, where necessary. Examples of such agent include conventional scale inhibitors, examples of which include organic polymers such as polyacrylic acid, polymaleic acid, copolymers of acrylic acid and 2-acrylamido-2-methylpropanesulfonic acid and copolymers of acrylic acid and 2-hydroxy-3-allyloxypropanesulfonic acid and compounds containing phosphorus such as nitrilotrimethylenephosphonic acid, hydroxyethylidenephosphonic acid, phosphonobutanetricarboxylic acid and sodium hexametaphosphate; sizing agents; paper strengthen agents; retention aids, drainage aids; slime control agents and various types of fillers.

In accordance with the process of the present invention, precipitates of the scale substance are formed in water in the wire parts or in the stuff and stock preparation parts by addition of the crystal which has the same or similar form to the scale substance into water in either parts. Because the precipitates of the scale substance are the fine particles of the crystals, the scale substance can be incorporated into paper together with the furnish without causing any adverse effect to the paper making process or to the quality of the paper products. The scale substance is removed to the outside of the system of the paper-making process in the form incorporated into the wet web. Therefore, no special apparatus for removing scale is required and prevention of scale formation and removal of the scale substance to the outside of the system can easily be achieved.

In the process of the present invention, the scale components in the condition of supersaturation is forced to separate as precipitates by addition of the crystal which has the same or similar form to the scale substance to water in the process. Thus, the degree of supersaturation of the scale components decreases and scale formation is prevented. For example, to prevent scale formation of calcium sulfate, precipitation of calcium ion and sulfate ion which are in the condition of supersaturation in the process water are promoted by addition of a crystal of calcium sulfate into water. As the result, the supersaturation is eliminated and scale formation is prevented. Most of the crystal of calcium sulfate which is used to eliminate the supersaturation and has finished playing the expected role is transferred into the wet web together with the furnish and removed to the outside of the system although a portion of the crystal is removed by a screen as sludge. The crystal transferred into paper does not cause any adverse effects to the production of paper or to the quality of the produced paper because the crystal is in the form of fine particles.

To summarize the advantages of the present invention, in accordance with the process of the present invention, a larger effect to prevent scale formation in the paper-making process than the effect of conventional scale inhibitors can be obtained. Precipitates of the crystal of the scale substance are fine particles. Therefore, the crystal does not cause any problem on the production of paper or on the quality of the produced paper. The crystal can be incorporated into the produced paper without any additional treatment and removed to the outside of the system.

### EXAMPLES

The present invention is described more specifically with reference to the following examples. However, the present invention is not limited to the examples.

A test apparatus and test water simulating those of a stock preparation part of a paper machine were used. The flow chart of the test apparatus is shown in Figure 1.

In tank A, water prepared by dissolving 3.33 g of calcium chloride and 2.96 g of sodium sulfate per 1 liter of water was placed. Water in tank A contained 1,200 mg/liter of calcium ion and 2,000 mg/liter of sulfate ion which were dissolved in water. An aqueous solution was prepared by dissolving sodium sulfate in such an amount that the concentration of sulfate ion was 133.340 mg/liter and placed in tank B. Water containing an agent for prevention of scale formation was placed in tank C.

Tank D is an apparatus simulating a machine chest. To tank D, water in tank A was continuously supplied at the rate of 16 liters/hour and water in tank B was continuously supplied at the rate of 60 ml/hour. Water containing an agent for prevention of scale formation is continuously added to tank D from tank C. The concentration of sulfate ion in tank D became 2,500 mg/liter and precipitates of calcium sulfate were formed.

An overflow outlet E was provided at tank D so that water in tank D overflows when the amount of water exceeded 8 liters. Water in tank D was passed, at the rate of 10 liters/minute, through an acrylic resin column G equipped with a stainless steel tube F through which warm water of 50°C could be passed. Water for the test was brought into contact with the heat exchanger surface of the stainless steel tube and, then, returned to tank D.

After water was supplied through the acrylic resin column continuously for 8 hours, the amount of scale formed to the surface of the stainless steel tube was obtained from the increase in the weight of the stainless steel tube after the tube was dried. A sample was taken from water in tank D and crystal was separated by filtration through a filter of 0.1 µm. The obtained crystal was dispersed again in methanol and the distribution of particle size was measured.

### Example 1

In tank C, a 50% by weight aqueous dispersion of synthetic calcium sulfate dihydrate (particle diameter: 20 to 50 µm, specific gravity: 2.32) was placed and then continuously supplied to tank D at the rate of 0.46 ml/hour. The added amount of synthetic calcium sulfate was 20 mg per 1 liter of the total of the amounts of water in tank A and in tank B.

After the test for 8 hours, the amount of scale formed on the surface of the stainless steel tube was 0.02 mg/cm². The diameter of crystal particles in water in tank D was 40 to 60 µm.

### Example 2

In tank C, a 50% by weight aqueous dispersion of natural calcium sulfate dihydrate (particle diameter: 5 to 10 µm, specific gravity: 2.32) was placed and then continuously supplied to tank D at the rate of 0.46 ml/hour. The added amount of natural calcium sulfate was 20 mg per 1 liter of the total of the amounts of water in tank A and in tank B.

After the test for 8 hours, the amount of scale formed on the surface of the stainless steel tube was 0.05 mg/cm². The diameter of crystal particles in water in tank D was 20 to 25 µm.

### Example 3

The same procedures as those conducted in Example 2 were conducted except that the supply rate of the 50% by weight aqueous dispersion of natural calcium sulfate was 0.92 ml/hour. The added amount of natural calcium sulfate was 40 mg per 1 liter of the total of the amounts of water in tank A and in tank B.

After the test for 8 hours, the amount of scale formed on the surface of the stainless steel tube was 0.02 mg/cm². The diameter of crystal particles in water in tank D was 20 to 30 µm.

### Comparative Example 1

In tank C, a 20% by weight aqueous solution of sodium polyacrylate (molecular weight: 6,000) was placed and then continuously supplied to tank D at the rate of 3.06 ml/hour. The added amount of sodium polyacrylate was 40 mg per 1 liter of the total of the amounts of water in tank A and in tank B.

After the test for 8 hours, the amount of scale formed on the surface of the stainless steel tube was 2.35 mg/cm².

### Comparative Example 2

In tank C, a 20% by weight aqueous solution of sodium hexametaphosphate was placed and then continuously supplied to tank D at the rate of 2.68 ml/hour. The added amount of sodium hexametaphosphate was 40 mg per 1 liter of the total of the amounts of water in tank A and in tank B.

After the test for 8 hours, the amount of scale formed on the surface of the stainless steel tube was 1.95 mg/cm².

### Comparative Example 3

Water in tank A and water in tank B were continuously supplied to tank D without addition of water in tank C.

After the test for 8 hours, the amount of scale formed on the surface of the stainless steel tube was 5.25 mg/cm².

The results of Examples 1 to 3 and Comparative Examples 1 to 3 are shown in Table 1.

**Table 1**

| | agent | | amount of formed scale (mg/cm²) | diameter of crystal particles (µm) |
|---|---|---|---|---|
| | type | amount as pure agent (mg/liter) | | |
| Example 1 | 50% by wt. aq. dispersion of synthetic calcium sulfate | 20 | 0.02 | 40 - 60 |
| | | | | |
| Example 2 | 50% by wt. aq. dispersion of natural calcium sulfate | 20 | 0.05 | 20 - 25 |
| | | | | |
| Example 3 | 50% by wt. aq. dispersion of natural calcium sulfate | 40 | 0.02 | 20 - 30 |
| Comparative Example 1 | 20% by wt. aq. solution of sodium polyacrylate | 40 | 2.35 | - |
| | | | | |
| Comparative Example 2 | 20% by wt. aq. solution of sodium hexametaphosphate | 40 | 1.95 | - |
| | | | | |
| Comparative Example 3 | none | - | 5.25 | - |

As shown in Table 1, in Comparative Examples 1 and 2 in which a conventional scale inhibitor, i.e., sodium polyacrylate or sodium hexametaphosphate, was used, the amount of the formed scale decreased to about 40% of the amount of the formed scale in the case in which no scale inhibitor was used. In contrast, in Examples 1 to 3 in which a crystal which has the same or similar form to the scale substance was used in accordance with the process of the present invention, the amount of the formed scale decreased remarkably to 1/100 or less of the amount of the formed scale in the case in which no scale inhibitor was used. Thus, it can be understood that the process for prevention of scale formation of the present invention exhibits a remarkable effect to prevent scale formation in a paper-making process. The precipitated crystals had a diameter of particles of 20 to 25 µm or 40 to 60 µm. Incorporation of these crystals can be considered to cause no problem on the process for producing paper or the quality of the produced paper.

## Claims

1. A process for preventing scale formation in a paper-making process which comprises adding crystals as seed for crystallization having an average diameter of 0.05 to 100 µm and having the same chemical composition as that of the scale substance or being a crystal that belongs to the same crystal form as that of the scale substance and shows a difference in the lattice constants of 10% or less from those of the scale substance formed in a paper-making process into process water of stuff and stock preparation parts or wire parts of a paper machine, making precipitate the scale-forming components in the process water onto the crystal surfaces, coming in wet web through the conditions that the particles distribute among furnish in the wire parts of a paper machine, and removing the scale-forming components as the particles of crystals from the system of the paper-making process together with the produced paper.

2. A process according to Claim 1, wherein the scale substance is calcium sulfate and the crystal as seed for crystallization is calcium sulfate.

3. A process according to Claim 1, wherein the scale substance is calcium oxalate and the crystal as seed for crystallization is calcium oxalate.

4. A process according to Claim 1, wherein the crystal as seed for crystallization is added in an amount of 0.1 to 10,000 mg per 1 liter of water used in either parts.

5. A process according to Claim 1, wherein the crystals as seed for crystallization are added as powder or added in the form of slurry prepared by dispersing the crystal in water into the paper-making process.

6. A process according to Claim 1, wherein the crystals as seed for crystallization are added at the stuff and the stock preparation parts of the paper-making process.

7. A process according to Claim 1, wherein the crystals as seed for crystallization are used in combination with other agents which are conventional scale inhibitors, sizing agents, paper strengthen agents, retention aids, drainage aids and/or slime control agents.

## Patentansprüche

1. Verfahren zur Vorbeugung von Kesselsteinbildung in einem Papier-Herstellungsverfahren, das Hinzufügen von Kristallen als Kristallisationskeime, die einen durchschnittlichen Durchmesser von 0,05 bis 100 µm und die dieselbe chemische Zusammensetzung wie die der Kesselsteinsubstanz aufweisen oder ein Kristall sind, der zu derselben Kristallform wie derjenige der Kesselsteinsubstanz gehört und einen Unterschied in den Gitterkonstanten von 10% oder weniger von derjenigen der Kesselsteinsubstanz zeigt, die in einem Papier-Herstellungsverfahren gebildet wird, in Prozeßwasser von Papierzeug- und Papierstoffherstellungsteilen oder Drahtteilen einer Papiermaschine, Ausfällen der Kesselstein-bildenden Komponenten in dem Prozeßwasser auf den Kristalloberflächen, Hineinkommen in das Naßnetz durch die Bedingungen, daß die Partikel sich unter der Papiermasse in den Drahtteilen einer Papiermaschine verteilen und Entfernen der Kesselstein-bildenden Komponenten als die Kristallpartikel aus dem System des Papier-Herstellungsverfahrens, zusammen mit dem hergestellten Papier, umfaßt.

2. Verfahren nach Anspruch 1, wobei die Kesselsteinsubstanz Calciumsulfat ist und der Kristall als Kristallisationskeim Calciumsulfat ist.

3. Verfahren nach Anspruch 1, wobei die Kesselsteinsubstanz Calciumoxalat ist und der Kristall als Kristallisationskeim Calciumoxalat ist.

4. Verfahren nach Anspruch 1, wobei der Kristall als Kristallisationskeim in einer Menge von 0,1 bis 10.000 mg pro 1 Liter des in beiden Teilen verwendeten Wassers hinzugefügt wird.

5. Verfahren nach Anspruch 1, wobei die Kristalle als Kristallisationskeime in das Papier-Herstellungsverfahren als ein Pulver hinzugefügt werden oder in Form einer Schlämme, die durch Dispergieren des Kristalls in Wasser hergestellt wird.

6. Verfahren nach Anspruch 1, wobei die Kristalle als Kristallisationskeime in den Papierzeug- und Stoffherstellungsteilen des Papier-Herstellungsverfahrens hinzugefügt werden.

7. Verfahren nach Anspruch 1, wobei die Kristalle als Kristallisationskeime in Kombination mit anderen Mitteln verwendet werden, die herkömmliche Kesselsteininhibitoren, Leimmittel, Papier-verstärkende Mittel, Haltehilfen, Trocknungshilfen und/oder Schleimkontrollmittel sind.

## Revendications

1. Procédé pour empêcher la formation de dépôts dans un procédé de fabrication de papier qui comprend l'addition de cristaux comme germe de cristallisation présentant un diamètre moyen de 0,05 à 100 µm et présentant la même composition chimique que la substance des dépôts ou étant un cristal qui appartient à la même forme cristalline que celle de la substance de dépôts et présente une différence au niveau des constantes de réseau de 10% ou moins par rapport à celles de la substance de dépôts qui se forme dans un procédé de fabrication de papier dans l'eau de procédé des parties de préparation de pâte travaillée et de stock ou les parties de toile d'une machine à papier, faisant précipiter les composants formant des dépôts dans l'eau de procédé sur les surfaces du cristal, se trouvant en réseau humide dans des conditions telles que les particules se distribuent le long de la composition de fabrication dans les parties de toile d'une machine à papier et éliminant les composants formant des dépôts sous forme de particules de cristaux à partir du système du procédé de fabrication de papier conjointement avec le papier produit.

2. Procédé suivant la revendication 1, dans lequel la substance formant des dépôts est du sulfate de calcium et le cristal comme germe de cristallisation est du sulfate de calcium.

3. Procédé suivant la revendication 1, dans lequel la substance formant des dépôts est de l'oxalate de calcium et le cristal comme germe de cristallisation est de l'oxalate de calcium.

4. Procédé suivant la revendication 1, dans lequel le cristal comme germe de cristallisation est ajouté en une quantité de 0,1 à 10 000 mg pour 1 litre d'eau utilisée dans l'une ou l'autre partie.

5. Procédé suivant la revendication 1, dans lequel les cristaux comme germe de cristallisation sont ajoutés sous forme d'une poudre ou ajoutés sous forme d'une pâte préparée en dispersant le cristal dans de l'eau dans le procédé de fabrication de papier.

6. Procédé suivant la revendication 1, dans lequel les cristaux comme germe de cristallisation sont ajoutés aux parties de préparation de pâte travaillée et de stock du procédé de fabrication de papier.

7. Procédé suivant la revendication 1, dans lequel les cristaux comme germe de cristallisation sont utilisés en combinaison avec d'autres agents qui sont des inhibiteurs classiques de dépôts, des apprêts, des agents renforçant le papier, des aides à la rétention, des aides à l'égouttage, et/ou des agents de contrôle du dépôt dans les conduites.
